# EUROPÄISCHE PATENTSCHRIFT

(11) **EP 1 500 995 B1**
(45) Veröffentlichungstag und Bekanntmachung des Hinweises auf die Patenterteilung: **30.07.2008**
(21) Anmeldenummer: 04014535.1
(22) Anmeldetag: 22.06.2004
(51) Int. Cl.: G05B 19/418

(54) **Verfahren und Vorrichtung zur Überwachung und/oder Steuerung von Betriebsdaten bzw. Parametern, insbesondere vielschichtiger Anlagensysteme**
Method and apparatus for monitoring and/or controlling of operational data resp. parameters, especially for complex installation systems
Procédé et dispositif pour surveillance et/ou contrôle des données ou paramètres operationelles, notamment pour des système d'installations complexes

(30) Priorität: 22.07.2003 DE 10333214
(43) Veröffentlichungstag der Anmeldung: 26.01.2005
(73) Patentinhaber: SMS Demag AG, 40237 Düsseldorf (DE)
(72) Erfinder: Berger, Klaus-Dieter, 91315 Höchstadt a.d. Aisch (DE)
(74) Vertreter: Klüppel, Walter

(56) Entgegenhaltungen:
- DE-A- 10 006 126
- DE-U- 29 703 659
- US-H- H 979

## Beschreibung

Die Erfindung betrifft ein Verfahren zur Überwachung von Betriebsdaten insbesondere vielschichtiger Anlagensysteme mittels bevorzugt visueller und permanenter Kontrolle von Messdaten unter Verwendung eines Steuerpultes mit zumeist einer Mehrzahl zu beobachtender einzelner Monitore in Verbindung mit insbesondere fernsteuerbaren Stellarmaturen für verschiedene veränderliche Messdaten und Verfahrenszustände der Anlagensysteme. Die Erfindung betrifft auch eine Vorrichtung zur Überwachung und Steuerung der Betriebsdaten solcher komplexen Anlagensysteme.

Eine zumeist visuelle Überwachung und permanente Kontrolle von Messdaten bzw. veränderlichen Hilfsgrössen, beispielsweise von Parametern für Temperaturen, Drücke, Geschwindigkeiten - um nur einige wesentliche zu nennen - ist bei industriellen Anlagensystemen bekannt.

Üblicherweise ist hierfür ein räumlich ausgedehntes Steuerpult in einem separaten Anlagekontrollraum vorhanden, das dem verantwortlichen Anlage-Kontroller mit einer zumeist relativ grossen Anzahl zu beobachtender einzelner Monitore in Verbindung mit fernsteuerbaren Stellarmaturen für die verschiedenen zu beobachtenden veränderlichen Messdaten und Verfahrenszustände den Überblick über die Industrieanlage verschafft.

Aus der United States Statutory Invention Registration H979 ist ein Rückprojektionsdisplay in einem Head-up-Bereich im Cockpit eines Flugzeuges bekannt.

Die Deutsche Offenlegungsschrift DE 100 06 126 A1 offenbart einen tragbaren Computer in einer Prozesssteuerungsumgebung. Dieser Computer liefert über eine Anzeigeneinspiegelung Information die mit einem oder mehreren Geräten innerhalb eines Prozesssteuerungssystems in Zusammenhang stehen.

Das Deutsche Gebrauchsmuster DE 297 03 659 U1 offenbart eine Anordnung zur Darstellung von Informationen bei der ein erster Teil der Anordnung entweder als eine herkömmliche Anzeigevorrichtung oder als ein Rückprojektionsdisplay ausgeführt ist, bei der ein zweiter Teil der Anordnung als ein Head-up-Display ausgeführt ist und bei der der erste Teil der Anordnung mit dem zweiten Teil der Anordnung eine kombinierte Anzeigevorrichtung zur Darstellung der Information bildet.

Die an sich bekannten Überwachungssysteme erfordern vom Kontroller bzw. von den Kontrolleuren eine außerordentlich hohe Aufmerksamkeit und eine ständig zu wiederholende Anpassung des Auges an die unterschiedlichen Anzeigegeräte und deren wechselnde Entfernung Auge - Bildschirm, sowie Auge - Anzeigenhelligkeit usw. In der Folge tritt eine schleichende Ermüdung der Beobachtung ein, die sich bis zum Eintritt eines Fehlverhaltens steigern kann, mit z.T. unabsehbar negativen Folgen für das Ergebnis des durchzuführenden Verfahrens bzw. der zu steuernden Industrieanlage. Wegen der Vielzahl der Monitore ist sogar teilweise der Blick auf die Anlage aus dem Leitstand verstellt.

Ausgehend von dieser Erkenntnis liegt der Erfindung die Aufgabe zugrunde, ein Verfahren und eine Vorrichtung zu dessen Durchführung anzugeben, welche die vorgenannten Nachteile und Schwierigkeiten zu vermeiden hilft und insbesondere zur Verwendung in Leitständen von Anlagensystemen geeignet ist und dem Kontroller zu einer weniger ermüdenden, sicheren Überwachung der Industrieanlage bei einwandfreien Arbeitsverhältnissen verhilft.

Diese Aufgabe wird durch das in Anspruch 1 beanspruchte Verfahren gelöst.

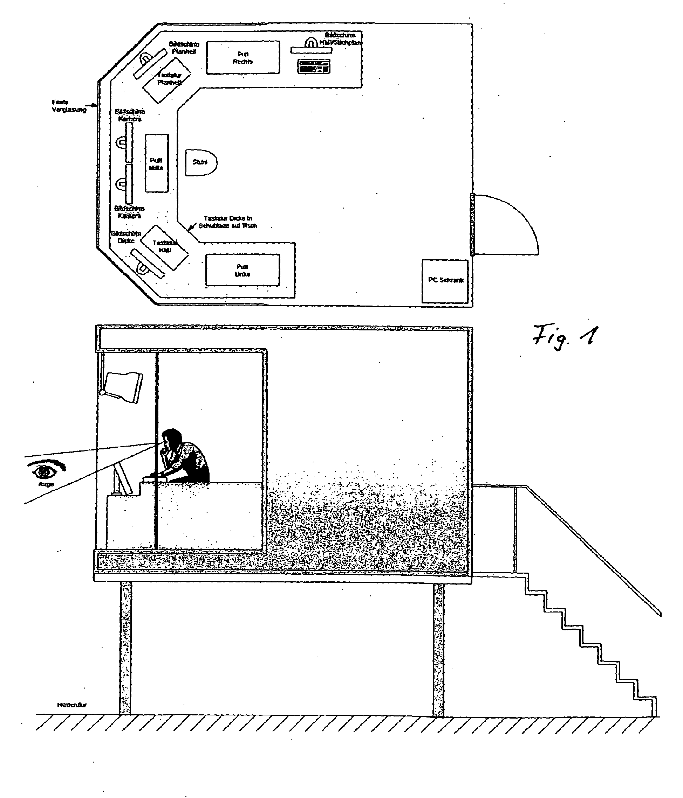

Damit entfällt mit Vorteil eine Anpassung des Auges an unterschiedliche Distanzen Auge - Bildschirm bzw. Auge - Anlage, mit besonderem Vorteil für z.B. Träger von Lese-Brillen (vgl. Figur 1).

Mit Vorteil können Informationen in vorgebbarer Reihenfolge gespeichert und dann beliebig abgerufen werden. Der Abruf kann auch nach einem Programm durchgeführt werden.

Im Ergebnis wird mit dem Verfahren nach der Erfindung ein wesentlich verbesserter Überblick insbesondere bei großen, weitläufig und / oder unübersichtlichen Anlagen bei erheblich verringerter Ermüdung der Augen für den Beobachter erreicht.

Eine Vorrichtung zur Durchführung des Verfahrens nach der Erfindung sieht vor, dass insbesondere für funktionswesentliche und nicht direkt einsehbare Anlagenteile bzw. -stationen Signalgeber wie beispielsweise Kameras und/oder Sensoren installiert sind, deren Bilder oder Messdaten mit Hilfe des Head-up-Displays in das Sichtfeld eines zentralen Beobachtungsfensters eines Steuerpults eingeblendet sind. Laser-Projektoren erzeugen ein virtuelles Bild in einem Abstand zwischen dem Beobachtungsfenster und der Anlage. Die Anzahl der bisher üblichen Bild-Monitore wird reduziert und der Leitstand wesentlich übersichtlicher.

Eine Ausgestaltung der Erfindung sieht weiter vor, dass die Vorrichtung Mittel zur Einstellung der relativen Helligkeit des Head-up-Bildes besitzt.

In weiterer Ausgestaltung der Erfindung ist vorgesehen, dass die Vorrichtung Mittel zur Einstellung von Größe und/oder Eingrenzung des Head-up-Bildes aufweist.

Und weiterhin kann von einer besonders zweckmässigen Massnahme mit der Erfindung Gebrauch gemacht sein, die darin besteht, dass die Vorrichtung Mittel zur Fokussierung zumindest von Teilen des Head-up-Bildes besitzt.

Mit Hilfe des erfindungsgemäßen Verfahrens und der entsprechenden Vorrichtung sowie ihrer spezieller Ausgestaltung ist der Operator bzw. verfahrensleitende Beobachter bspw. eines Walzwerkes in der Lage, sich ohne Ermüdung auf die Kontrolle insbesondere wesentlicher bzw. kritischer Punkte und Anlagenteile eines verzweigten Anlagensystems bei seiner Überwachung zu konzentrieren und damit auch das Zusammenwirken mit Sicherheits- bzw. Warneinrichtung zu sichern.

## Patentansprüche

1. Verfahren zur Überwachung von Betriebsdaten von Systemen einer Anlage mittels bevorzugt visueller und permanenter Kontrolle von Messdaten unter Verwendung eines Steuerpultes mit zumeist einer Mehrzahl zu beobachtender einzelner Monitore in Verbindung mit insbesondere fernsteuerbaren Stellarmaturen für verschiedene veränderliche Messdaten und Verfahrenszustände der Systeme, und unter Verwendung eines zentralen Beobachtungselementes in Form eines Head-up-Displays, **durch** welches Informationen unterschiedlichster Art im Bereich des Steuerpultes in das Sichtfeld eines zentralen Beobachtungsfensters eingeblendet werden,
**dadurch gekennzeichnet,**
**dass** mittels Laser-Projektoren ein virtuelles Bild in dem Sichtfeld in einem Abstand zwischen dem Beobachtungsfenster und der Anlage erzeugt wird.

2. Verfahren nach einem oder mehreren der Ansprüche 1,
**dadurch gekennzeichnet,**
**dass** Informationen bzw. die entsprechenden Head-up-Displays in vorgebbarer Reihenfolge abgespeichert und dann in beliebiger Reihenfolge oder nach Programm abgerufen werden.

3. Vorrichtung zur Überwachung von Betriebsdaten vom insbesondere vielschichtigen Systemen einer Anlage, zur Durchführung des Verfahrens nach einem der Ansprüche 1 oder 2,
wobei insbesondere für funktionswesentliche und nicht direkt einsehbare Anlagenteile bzw. -stationen Signalgeber wie beispielsweise Kameras und/oder Sensoren installiert sind, deren Bilder oder Messdaten mit Hilfe des Head-up-Displays in das Sichtfeld eines zentralen Beobachtungsfensters eines Steuerpultes eingeblendet sind
**gekennzeichnet durch**,
Laser-Projektoren zum Erzeugen eines virtuellen Bildes in einem Abstand zwischen dem Beobachtungsfenster und der Anlage.

4. Vorrichtung nach Anspruch 3,
**dadurch gekennzeichnet,**
**dass** Mittel zur Einstellung der Helligkeit des Head-up-Bildes eingesetzt sind.

5. Vorrichtung nach einem der Ansprüche 3 oder 4,
**dadurch gekennzeichnet,**
**dass** Mittel zur Einstellung von Ort, Größe und/oder Eingrenzung des Head-up-Bildes vorgesehen sind.

6. Vorrichtung nach einem oder mehreren der Ansprüche 3 bis 5,
**dadurch gekennzeichnet,**
**dass** Mittel zur Fokussierung von Teilen des Head-up-Bildes vorgesehen sind.

7. Vorrichtung nach einem oder mehreren der Ansprüche 3 bis 6,
**dadurch gekennzeichnet,**
**dass** das Head-up-Display Mittel zum Zusammenwirken mit Wameinrichtungen besitzt.

8. Anwendung von Verfahren und Vorrichtung nach einem oder mehreren der Ansprüche 1 bis 7 auf komplexe Anlagensysteme der Grundstoffindustrie bzw. in Anlagen der Hüttentechnik wie Hochofen-, Stahlwerksanlagen, Stranggießanlagen, Walzwerke, Bandveredelungsanlagen als Einzelanlagen oder als Anlagenlinie.

## Claims

1. Method of monitoring operating data of systems of a plant by means of preferential visual and permanent checking of measurement data with use of a control desk with at least a plurality of individual monitors, which are to be observed, in conjunction with, in particular, remotely controllable setting instruments for different variable measurement data and method states of the systems, and with use of a central observation element in the form of a head-up display, by which data of the most diverse kind are inserted in the region of the control desk into the viewing field of a central observation window, **characterised in that** a virtual image is produced by means of laser projectors in the viewing field at a spacing between the observation window and the plant.

2. Method according to claim 1, **characterised in that** data or the corresponding head-up displays are stored in a predeterminable sequence and then called up in any sequence or according to program.

3. Device for monitoring operating data of, in particular, multilayer systems of a plant, for carrying out the method according to one of claims 1 and 2, wherein signal transmitters such as, for example, cameras and/or sensors, the images or measurement data of which are inserted with the help of the head-up display into the viewing field of a central observation window of a control desk, are installed particularly for functionally essential plant parts or stations which are not directly observable, **characterised by** laser projectors for producing a virtual image at a spacing between the observation window and the plant.

4. Device according to claim 3, **characterised in that** means for setting the brightness of the head-up image are used.

5. Device according to one of claims 3 and 4, **characterised in that** means for setting place, size and/or localisation of the head-up image are provided.

6. Device according to one or more of claims 3 to 5, **characterised in that** means for focussing parts of the head-up image are provided.

7. Device according to one or more of claims 3 to 6, **characterised in that** the head-up display has means for co-operating with warning devices.

8. Use of method and device according to one or more of claims 1 to 7 on complex plant systems of the raw materials industry or in plants of metallurgy technology such as blast furnace plants, steelworks, continuous casting plants, rolling mills, strip coating plants as individual plants or as plant line.

## Revendications

1. Procédé pour la supervision de données opérationnelles de systèmes d'une installation au moyen d'un contrôle de préférence visuel et permanent de données de mesure en utilisant un pupitre de commande avec la plupart du temps une pluralité de moniteurs individuels à observer, en association avec des vannes de réglages notamment télécommandables pour différentes données de mesure et différents états de procédés variables des systèmes et en utilisant un élément d'observation centralisé sous la forme d'un affichage "tête haute", par lequel des informations des types les plus divers sont superposées dans la région du pupitre de commande dans le champ visuel d'une fenêtre d'observation centralisée, **caractérisé en ce que**,
au moyen de projecteurs laser, une image virtuelle est créée dans le champ de vision, à une distance entre la fenêtre d'observation et l'installation.

2. Procédé selon l'une quelconque ou plusieurs des revendications 1,
**caractérisé en ce que**,
des informations ou les affichages "tête haute" correspondants sont mémorisés selon une séquence prédéfinissable, puis interrogés selon une séquence quelconque ou par programme.

3. Dispositif pour la supervision de données opérationnelles, de systèmes notamment multicouches d'une installation, pour la réalisation du procédé selon l'une quelconque des revendications 1 ou 2,
pour notamment des éléments ou des postes de l'installation qui sont essentiels pour la fonction et pas directement consultables, des générateurs de signaux, comme par exemple des caméras et/ou des capteurs étant installés, dont les images ou les données de mesure sont superposées au moyen de l'afficheur "tête haute" dans le champ visuel d'une fenêtre d'observation centralisée d'un pupitre de commande ;
**caractérisé par**
des projecteurs au laser pour la création d'une image virtuelle à une distance entre la fenêtre d'observation et l'installation.

4. Dispositif selon la revendication 3,
**caractérisé en ce que**,
des moyens sont utilisés pour le réglage de la luminosité de l'image "tête haute".

5. Dispositif selon l'une quelconque des revendications 3 ou 4,
**caractérisé en ce que**,
des moyens sont prévus pour le réglage sur place de la dimension et/ou la délimitation de l'image "tête haute".

6. Dispositif selon l'une quelconque ou plusieurs des revendications 3 à 5,
**caractérisé en ce que**,
des moyens sont prévus pour la focalisation de parties de l'image "tête haute".

7. Dispositif selon l'une quelconque ou plusieurs des revendications 3 à 6,
**caractérisé en ce que**,
l'affichage "tête haute" comporte des moyens pour coopérer avec des dispositifs d'avertissement.

8. Utilisation du procédé et du dispositif selon l'une quelconque ou plusieurs des revendications 1 à 7 sur des systèmes d'installations complexes de l'industrie des produits de base, respectivement dans des installations de la technique de la métallurgie comme les installations de haut-fourneau, des installations de sidérurgie, des installations à coulée continue, des laminoirs, des installations d'affinage de bandes sous forme d'installations individuelles ou de lignes d'installations.
